# EUROPEAN PATENT APPLICATION

(11) **EP 1 519 504 A1**
(43) Date of publication of application: **30.03.2005**
(21) Application number: 03425630.5
(22) Date of filing: 29.09.2003
(51) Int. Cl.: H04J 3/06

(54) **Method and device implementing a serial SDH aligner**

(71) Applicant: CNX S.p.A., 20126 Milano (IT); Siemens Aktiengesellschaft, 80333 München (DE)
(72) Inventor: Capezzali, Roberto, 67100 L'Aquila (IT)
(74) Representative: Giustini, Delio

(57) **Abstract**

The present invention relates to a device and a method implementing the SONET/SDH aligner by directly processing the incoming serial data stream without serial -to-parallel converter.

The invention, consists of a Pattern Detector Module (Fig.1) where an appropriate alignment word detection (AW_DEC) state machine (106), adapted to move into 6 different states (Fig.2) plus a simple 1 -bit comparator (107), detects the word boundary and providing the alignment word detection s ignals to the downstream alignment frame state machine in charge of the SDH alignment process.

## Description

### Field of the invention

The present invention relates to a method for detecting the frame alignment signal for the frame start recovery as defined in the ITU -T Recommendation G.806 in a synchronous digital telecommunications system, such as an SDH or SONET system.

More particular ly, the invention relates to a specific alignment process used in synchronous digital hierarchy (SDH) equipment compliant with the ITU -T Recommendation G.783 and/or the ITU-T Recommendation G. 705.

Since the SDH structure does not belong to the scope of the present invention, they will not be described more in this connection. The SDH structure thereof is described in the ITU-T Recommendation G.707, which is referred to for a more detailed description.

### Background art

In a frame alignment process is defined the correspondence between the words of the target sentence and the words of the source sentence.

Models describing these types of dependencies are referred to as alignment models.

In the SDH technology the STM -N signal contains a frame alignment pattern w hich shall be continuously checked with the presumed frame start position for alignment.

The frame alignment pattern in a STM -N signal is composed of 3xN A1 bytes followed by 3xN A2 bytes, as defined in the ITU-T G.707, where:
- A1: 11110110
- A2: 00101000

The framing pattern searched for is usually a subset of the A1 and A2 bytes contained in the STM-N signal.

In the STM-1 frame, for instance, the alignment pattern is the sequence A1A1 A2A2 that is related to a particular hexadecimal sequence of F6F62828, 32 bits wide.

The block diagram of an alignment model consists of two basic modules: the Pattern Detector Module and the Word Aligner Module.

The sequence of A1 bytes followed by A2 bytes is checked by the pattern detector module, in order to find the alignment word detection (AW_DEC) signal.

The AW_DEC signal is used in the Word Aligner Module where an alignment frame state machine checks for subsequent arrivals (one each 125 microseconds, that is the STM-N frame period) of the alignment word.

ITU recommendation (ITU G-783) define a method to implement that frame state machine in charge to align the STM -N data stream on the basis of incoming bytes value.

What is not specified by recomme ndations is how to detect the alignment word from a serial incoming data stream.

In the prior art the usual approach, in order to find the incoming alignment word, is to perform a preliminary deserialization of the data to a parallel register.

If an STM-1 incoming data stream is assumed, this register should be able to reveal the presence of the alignment word (32-bit-wide in the following).

As there is no indication about where the single byte begins (the so -called "word boundary"), the register is usually two times wide the alignment word, which means 64 bit, that require 64 flip-flop if implemented in hardware.

Once the data stream has been stored in such register, there are 32 different positions in which the alignment word can be found, so 32 comparari sons to the F6F62828 value (hexadecimal) must be implemented, using 32 multiplexers of the type 32-to-1, or similar structures.

When the correct alignment word appear in a given position of the register, one of these comparators raises the AW_DEC signal, giving to the alignment frame state machine the information about byte boundary and frame start position.

Using this information, the alignment frame state machine activates a frame byte counter that checks, in the following expected frame start position plus a given offset, the presence of the alignment word (AW_CHECK in the following).

Comparing AW_CHECK and AW_DEC the alignment frame state machine can align the STM -N data stream and deserialize the data to (typically) 8-bit-wide words.

The main disadvan tage of such an implementation is the large amount of logic (64 flip -flops plus 32 multiplexers) necessary to find the byte boundary and the AW_DEC position, which can be very critical on small devices or in implementation where this functions has to be re peated on a large number of incoming data streams.

Improvements to this approach have been introduced in order to provide some gate count optimization, but all these previous models are still realized throughout logic comparison in a parallel format.

The solutions thereof are described e.g. in the followings documents, which are referred to for a more detailed description:
- Using Stratix GX Devices for SONET/SDH Backplanes - ALTERA white paper May 2003, ver.1.0
- Word Alignment and SONET/SDH Deframing - Author : Nick Sawyer; XILINX application note, November 15, 2002.

### Objects of the Invention

The main object of the present invention is to overcome the drawbacks of the known art by introducing a device and a method implementing the SONET/SDH aligner directly on the serial data stream without any intermediate de-serialization.

### Summary of invention

According to a first aspect of the invention, there is provided a method for the detection of the alignment word and the byte boundary in synchronous digital hierarchy telecommunications systems in the course of a specific alignment process for the detection of the alignment word and the byte boundary, as disclosed in claim 1.

According to an additional aspect of the invention there is provided a device implementing the method of the main claim, as claimed in claim 2.

The solution of the invention is especially intended for the implementation on an Application Specific Integrated Circuit (ASIC) or a Field Programmable Gate Array (FPGA) of an SDH STM-1 aligner.

The incoming data stream will be assumed to be serial (1 - bit-wide bus) with a clock which could be either provided on a distinguished incoming line or extracted through an appropriate clock recovery circuit. The data bit rate will be 155 520 kbit/s and the clock frequency 155 520 kHz.

The present invention relates to a device and a method implementing the SONET/SDH aligner processing directly the incoming serial data stream without deserialization.

The invention consists of Pattern Detector Module where an appropriate AW_DEC state machine (106), adapted to move into 6 different states plus a simple 1 -bit comparator, detects the word boundary AW_DEC and delivers it to the downstream alignment frame state machine in charge for the SDH alignment process.

Additional feat ures of the present invention which are considered to be novel will set forth in the appended claims taken in conjunction with the accompany drawings.

### Brief description of the drawings.

Further advantages, characteristics and conditions of use will be appa rent from the more particular description of exemplary embodiment, which is shown as an example but and without introducing any limitation, as illustrated in appended drawings, were:
**Figure 1** describes the bock diagram of the SONET/SDH ;
**Figure 2** describes the state machine to detect the alignment words.

### Detailed description of a preferred embodiment of the invention

The preferred embodiment of the invention illustrated in the figures and hereinafter described, refers to a device and a method implementing a Pattern Detector Module (100) required in the specific alignment process. Such specific alignment process being used in synchronous digital hierarchy (SDH) equipment compliant with the ITU-T Recommendation G.806 and the ITU-T Recommendation G.783.

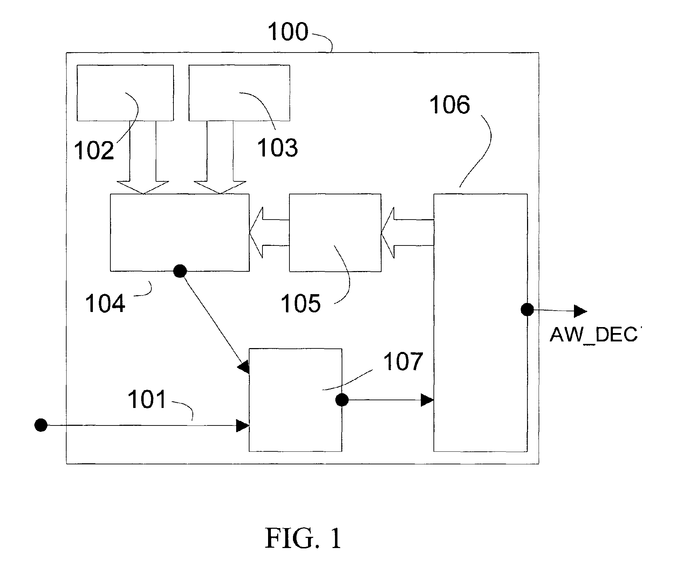

According to the attached Figure 1, in which such device (100) is depicted, the incoming data (101) is bit -to-bit compared to the alignment words (102,103) through the logic circuit (104) and a 4-bit counter (105) of the type "15-down-to- 0" .

The AW_DEC state ma chine (106), adapted to move into 6 different states plus a simple 1 -bit comparator (107), detects the byte boundary and generates the AW_DEC signal, which is provided to the downstream alignment frame state machine in charge for the SDH alignment process.

The AW_DEC state machine (106) starts in the "On wait" status. The "15-down-to-0" counter (105) is reset to the 15 value. In "Passing F6F6" and "Passing 2828" status, the frame state machine checks the match between the current incoming bit and the bit of F6F6 or 2828 values pointed by the current counter value. Each time a match is found, the counter value is decreased. In "Passing further F6" status a further incoming hf6 word is checked for (more than 2 F6 word will income in normal conditions).

Once in the "Found F6F62828" status, the frame state machine raises the AW_DEC signal to the alignment frame state machine.

In the preferred embodiment of the invention the incoming data stream (101), received by the Pattern Detector Module (100), is a serial 1 -bit-wide stream, with an associated clock; 155 520 kbit/s being the signal bit rate and the 155 520 kHz the clock frequency.

According to the attached Figure 1, in which such Pattern Detector Module (100) is described, the incoming data (101) is received by a simple 1 -bit comparator (107), such as it can be implemented using a single XOR port.

The incoming data (101) is bit -to-bit compared to the alignment words (102,103), through a logic circuit (104) of the multiplexer-type and a 4 -bit counter (105), of t he type "15-down-to-0" .

The AW_DEC state machine (106), such as it can be implemented using 3 flip -flops, composed by 6 different states, together with the 1-bit comparator (107), detects the byte boundary and the generates AW_DEC signal, which is provided to the downstream alignment frame state machine in charge for the SDH alignment process.

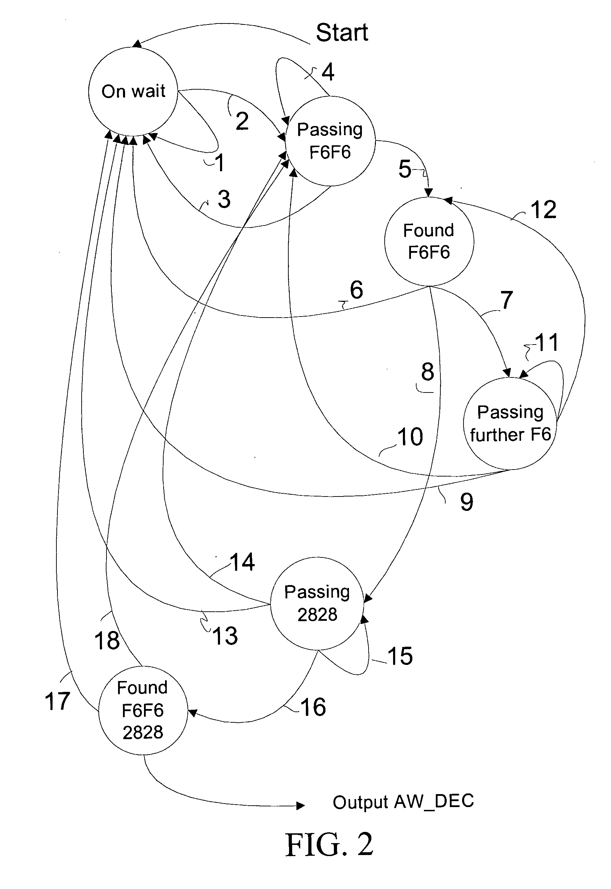

The algorithm used by the Pattern Detector Module (100) to detect the byte boundary, is depicted by the state diagram described in Figure 2 where the alignment pattern A1A1A2A2 of the STM-1 frame, is related to the particular hexadecimal sequence of F6F62828.

The followings six different states are defined for the AW_DEC state machine:
- On wait
- Passing F6F6
- Found F6F6
- Passing further F6
- Passing 2828
- Found F6F62828

The AW_DEC state machine starts in the "On wait" status and the counter (105) is set to the 15 value.

Starting from the "On wait" status, the following two actions are possible:
1. Mismatch with F6F6 first bit. The counter (105) is reset to 15 and the AW_DEC st ate machine returns to the status "On wait";
2. Match with F6F6 first bit. The counter (105) is decreased by 1 and the new status is "Passing F6F6".
   Starting from the "Passing F6F6" status, the following three actions are possible:
3. Mismatch with F6F6 subseque nce. The counter (105) is reset to 15 and the AW_DEC state machine returns to the status "On wait";
4. Match with F6F6 currently checked bit. The counter (105) is decreased by 1 (counter hasn't reached the 0 value) and the AW_DEC state machine remains in the status "Passing F6F6";
5. Match with the whole F6F6 sequence (counter has reached the 0 value). The counter (105) is reset to 15 and the state machine moves to the new status "Found F6F6".
   Starting from the "Found F6F6" status, the following three actions are possible:
6. Mismatch with 2828 first bit and F6F6 first bit. The counter (105) is reset to 15 and the AW_DEC state machine returns to the status "On wait";
7. Mismatch with 2828 first bit and match with F6 first bit. The counter (105) is reset to 6 (because F6 first bit has already been checked) and the status is "Passing further F6".
8. Match with 2828 first bit. The counter (105) is reset to 14 (because 2828 first bit has already been checked) and the new status is "Passing 2828".
   Starting from the "Passing furt her F6" status, the following four actions are possible:
9. Mismatch with F6 subsequence and mismatch with F6F6 first bit. The counter (105) is reset to 15 and the AW_DEC state machine returns to the status "On wait";
10. Mismatch with F6 subsequence and match w ith F6F6 first bit. The counter (105) is reset to 14 (because F6F6 first bit has already been checked) and the AW_DEC state machine returns to the status "Passing F6F6";
11. Match with F6 currently checked bit. The counter (105) is decreased by 1 (counter hasn 't reached the 0 value) and the AW_DEC state machine remains in the status "Passing further F6";
12. Match with the whole F6 sequence (counter has reached the 0 value). The counter (105) is reset to 15 and the AW_DEC state machine returns to the status "Found F6F6".
   Starting from the "Passing 2828" status, the following four actions are possible:
13. Mismatch with 2828 currently checked bit and mismatch with F6F6 first bit. The counter (105) is reset to 15 and the AW_DEC state machine returns to the status "On wait";
14. Mismatch with 2828 currently checked bit and match with F6F6 first bit. The counter (105) is reset to 14 (because F6F6 first bit has already been checked) and the AW_DEC state machine returns to the status "Passing F6F6";
15. Match with 2828 currently check ed bit. The counter (105) is decreased by 1 (counter hasn't reached the 0 value) and the AW_DEC state machine remains in the status "Passing 2828";
16. Match with the whole 2828 sequence (counter has reached the 0 value). The counter (105) is reset to 15 and t he new status is "Found F6F62828". Once in the "Found F6F62828" status, the AW_DEC state machine raises the AW_DEC signal to the alignment frame state machine.
   Starting from the "Found F6F62828" status, the following two actions are possible:
17. Mismatch with F6F6 first bit. The counter (105) is reset to 15 and the AW_DEC state machine returns to the status "On wait";
18. Match with F6F6 first bit. The counter (105) is reset to 14 (because F6F6 first bit has already been checked) and the AW_DEC state machine retur ns to the status "On wait".

In "Passing F6F6" and "Passing 2828" status, the Pattern Detector Module (100) checks the match between the current incoming bit and the bit of F6F6 or 2828 values pointed by the current counter value. Each time a match is foun d, the counter value is decreased. In "Passing further F6" status a further incoming F6 word is checked for (more than 2 F6 word will income in normal conditions).

Once in the "Found F6F62828" status, the Pattern Detector Module (100) raises the AW_DEC signal to the alignment frame state machine.

Though the invention has above been described with reference to examples according to the attached drawings, it is clear that the invention is not restricted thereto, but it can be modified within the scope of the inventive idea set forth above and in the attached claims.

Even if the invention has above been described as an example related expressly to an SHD system, the solution of the invention can naturally be applied to any corresponding system compliant with th e ITU -T Recommendation G.806, the ITU-T Recommendation G. 783 and/or the ITU -T Recommendation G. 705, e.g. to a SONET system.

Though the invention has further been described with reference to a signal on STM -1 level, it is clear that the invention can be applied in the future to aligning signals on higher hierarchy level.

Though the invention has further been described with reference to a signal on STM -1 level, it is clear that the invention can be applied to any signal which requires a frame alignment achieved throughout the detection of an alignment word.

## Claims

1. Method for the detection of the alignment word and the word boundary in synchronous digital hierarchy telecommunications systems in the course of a specific alignment process, **characterized by** the following steps:
- receiving the serial incoming data stream;
- comparing the incoming data stream, one bit at the time, with the expected value of the actual bit provided by means of an alignment word detection state machine and belonging to the alignment wor d according with the alignment word reference available in a storage circuit;
- raising the alignment word detection signal only if all the bits belonging to the alignment word are detected in sequence.

2. Device (100) for the detection of the alignment words in the data stream originated by digital hierarchy telecommunications systems, **characterized in that** it comprises:
- comparing means (104; 107) adapted to compare, bit by bit, the serial incoming data stream with the expected value of the actual bit belonging to the alignment word according with the alignment word reference;
- memory means (102;103) adapted to supply to said comparing means said actual bit;
- an alignment word detection state machine (106), adapted to:
- detect the byte boundary;
- drive said counting means (105), and
- provide the detected alignment word detection signal to the downstream alignment frame state machine in charge of the alignment process;
- counting means (105) of the type 2·*m* module, being *m* the length of each byte of the alignment word, driven by the alignment word detection state machine and adapted to give to said comparing means the value of the alignment word reference.

3. The device of claim 2, **characterized in that** said alignment word detection state machine is ad apted to move into the following 6 different states:
- On wait
- Passing A1A1
- Found A1A1
- Passing further A1
- Passing A2A2
- Found A1A1A2A2,
whereas A1 and A2 are bytes of the alignment word to be detected.

4. The device of the claims 2 and 3 **characterized in that** st arting from the "On wait" status of the alignment word detection state machine (106), the following two actions are possible:
a ) if in said comparing means the result of the comparison is a mismatch with A1A1 first bit, said counting means (105) are reset to 2·*m* and the alignment word detection state machine moves to the status "On wait";
b ) if in said comparing means the result of the comparison is a match with A1A1 first bit, said counting means (105) are decreased by 1 and the alignment wor d detection state machine moves into "Passing A1A1" status;

5. The device of the claims 2 and 3, **characterized in that** starting from the "Passing A1A1" status of the alignment word detection state machine (106), the following three actions are possible:
c ) if in said comparing means the result of the comparison is a mismatch with A1A1 subsequence, said counting means (105) are reset to 2·*m* and the alignment word detection state machine returns to the "On wait" status;
d ) if in said comparing mean s the result of the comparison is a match with A1A1 currently checked bit, said counting means (105) are decreased by 1 and the alignment word detection state machine returns to the "Passing A1A1" status;
e ) if in said comparing means the result of the comparison is a match with the whole A1A1 sequence, said counting means (105) are reset to 2·*m* and said alignment word detection state machine moves into "Found A1A1" status.

6. The device of the claims 2 and 3, **characterized in that** starting fr om the "Found A1A1" status of the alignment word detection state machine (106), the following three actions are possible:
f ) if in said comparing means the result of the comparison is a mismatch with A2A2 first bit and A1A1 first bit, said counting means (105 ) are reset to 2·*m* and the alignment word detection state machine moves into the "On wait" status;
g ) if in said comparing means the result of the comparison is a mismatch with A2A2 first bit and match with A1 first bit, said counting means (105) are reset to *m*-1 and said alignment word detection state machine moves into the "Passing further A1" status.
h ) if in said comparing means the result of the comparison is a match with A2A2 first bit, said counting means are (105) are reset to 2·*m*-1 and said alignment word detection state machine moves into "Passing A2A2" status.

7. The device of the claims 2 and 3, **characterized in that** starting from the "Passing further A1" status of the alignment word detection state machine (106), the following four actions are possible:
i ) if in said comparing means the result of the comparison is a mismatch with A1 subsequence and mismatch with A1A1 first bit, said counting means (105) are reset to 2·*m* and the alignment word detection state machine returns to the "On wait" status;
j ) if in said comparing means the result of the comparison is a mismatch with A1 subsequence and match with A1A1 first bit, said counting means (105) are reset to 2*·m*-1 and the alignment word detection state machine returns to the "Passing A1A1" status;
k ) if in said comparing means the result of the comparison is a Match with A1 currently checked bit, said counting means (105) are decreased by 1 and the alignment word detectio n state machine returns to the "Passing further A1" status;
l) if in said comparing means the result of the comparison is a match with the whole A1 sequence, said counting means (105) are reset to 2·*m* and the alignment word detection state machine returns to the "Found A1A1" status.

8. The device of the claims 2 and 3, **characterized in that** starting from the "Passing A2A2" status of the alignment word detection state machine (106), the following four actions are possible:
m) if in said comparing means the result of the comparison is a mismatch with A2A2 currently checked bit and mismatch with A1A1 first bit, said counting means (105) are reset to 2·*m* and the alignment word detection state machine returns to the "On wait" status;
n ) if in said comparing means the result of the comparison is a mismatch with A2A2 currently checked bit and match with A1A1 first bit., said counting means (105) are reset to 2·*m*-1 and the alignment word detection state machine returns to the "Passing A1A1" status;
o ) if in said comparing means the result of the comparison is a match with A2A2 currently checked bit, said counting means (105) are decreased by 1 and the alignment word detection state machine returns to the "Passing A2A2" status;
p ) if in said comparing means the result of the comparison is a match with the whole A2A2 sequence, said counting means (105) are reset to 2·*m* and said alignment word detection state machine moves into "Found A1A1A2A2" status and raises the AW_DEC signal to the downstream alignment frame state machine

9. The device of the claims 2 and 3, **characterized in that** starting from the ""Found A1A1A2A2"" status of the alignment word detection state machine (106), the following two actions are possible:
q ) if in said comparing means the result of the comparison is a mismatch with A1A1 first bit, said counting means (105) are reset to 2·*m* and the alignment word detection state machine returns to the "On wait" status;
r ) if in said compar ing means the result of the comparison is a match with A1A1 first bit, said counting means (105) are reset to 2·*m*-1 and the alignment word detection state machine returns to the "On wait" status.

10. The device of claim 2, **characterized in that** said comparison means include:
- a 1-bit comparator circuit (107) receiving at its input the incoming data stream;
- a multiplexing logic circuit (104) giving to the 1-bit comparator circuit the expected value of the actual bit belonging to the alignment word according with the alignment word reference available in said storing means (102; 103) and the value reached by said counting means (105).

11. The device of claim 2 **characterized in that** said counting means (105) are implemented by means of a counter of the type "15-down-to-0".
